(19) Europäisches Patentamt / European Patent Office / Office européen des brevets

(11) EP 3 767 833 B1

(12) **EUROPÄISCHE PATENTSCHRIFT**

(45) Veröffentlichungstag und Bekanntmachung des Hinweises auf die Patenterteilung:
**23.10.2024 Patentblatt 2024/43**

(21) Anmeldenummer: **19186514.6**

(22) Anmeldetag: **16.07.2019**

(51) Internationale Patentklassifikation (IPC):
***H04B 1/16*** *(2006.01)* *H04B 1/08* *(2006.01)*

(52) Gemeinsame Patentklassifikation (CPC):
**H04B 1/1027; H04B 1/16;** H04B 1/08

(54) **EMPFANGSGERÄT ZUM SIGNALSENSITIVEN EMPFANGEN VON FUNKSIGNALEN**

RECEIVING DEVICE FOR SIGNAL SENSITIVE RECEPTION OF RADIO SIGNALS

APPAREIL RÉCEPTEUR PERMETTANT LA RÉCEPTION SENSIBLE AU SIGNAL DES SIGNAUX RADIO

(84) Benannte Vertragsstaaten:
**AL AT BE BG CY CZ DE DK EE ES FI FR GB GR HR HU IS IT LT LU LV MC MK MT NL NO PL PT RO RS SE SI SK SM TR**

(43) Veröffentlichungstag der Anmeldung:
**20.01.2021 Patentblatt 2021/03**

(73) Patentinhaber: **Rohde & Schwarz GmbH & Co. KG**
**81671 München (DE)**

(72) Erfinder: **BOEGL, Thomas**
**86179 Augsburg (DE)**

(74) Vertreter: **Novagraaf Group**
**Chemin de l'Echo 3**
**1213 Onex / Geneva (CH)**

(56) Entgegenhaltungen:
**EP-A1- 1 923 679 US-A- 3 544 900**

- **TIURI M E: "Radio Astronomy Receivers", IEEE TRANSACTIONS ON MILITARY ELECTRONICS,, 1 January 1964 (1964-01-01), pages 264 - 272, XP001412566**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 767 833 B1

## Beschreibung

GEBIET DER ERFINDUNG

Die vorliegende Erfindung betrifft ein Empfangsgerät zum signalsensitiven Empfangen von Funksignalen, insbesondere für den Einsatz in der Radioastronomie.

TECHNISCHER HINTERGRUND

Die Druckschrift Tiuri, M. E. "Radio Astronomy Receivers", IEEE Transactions on Military Electronics, 1.01,1964, Seite 264-272 beschreibt eine als "Graham's Receiver" bezeichnete Schaltungsanorndung, wobei eine Antenne eines Radioteleskops abwechselnd mit einem ersten Empfänger und einem zweiten Empfänger verbunden wird und die Signale an den Ausgängen der beiden Empfänger aufaddiert werden, was zu einer verbesserten Sensitivität führt.

Ein Empfangsgerät - meist auch kurz als Empfänger bezeichnet - ist ein Apparat aus dem Bereich der Nachrichtentechnik, mit dem meist elektromagnetische Signale empfangen werden können, häufig im Zusammenhang mit hochfrequenten (HF) Signalen. Empfangsgeräte verstärken die Signale, die von einer Empfangsantenne aufgefangen werden und wandeln sie mit Hilfe von geeigneten elektronischen Schaltungen in hörbare Signale, sichtbare Signale, analoge oder digitale Signale oder Befehle um.

Der sensitive Empfang von Funksignalen ist insbesondere in der Radioastronomie von besonderer Relevanz. Die Radioastronomie ist ein Teilgebiet der Astronomie, in dem astronomische Objekte mittels der von ihnen ausgesandten Radiowellen untersucht werden. Auch wenn die vorliegende Erfindung sowie die ihr zugrunde liegende Problematik nachfolgend am Beispiel von Empfängern im Bereich der Radioastronomie erläutert wird, ist sie nicht darauf beschränkt, sondern lässt sich auch für andere signalsensitive Empfängeranwendungen vorteilhaft anwenden und einsetzen.

Fig. 1 der Zeichnung zeigt ein Beispiel einer in der Radioastronomie verwendeten, allgemein bekannten Empfängeranordnung mit zwei parallelen Empfangsgeräten. Die beiden voneinander getrennten Empfangsgeräte werden an jeweils diesen Empfangsgeräten zugeordneten Empfangsantennen auf dasselbe Empfangssignal abgestimmt. Die jeweiligen Ausgangssignale der einzelnen Empfangsgeräte werden anschließend überlagert. Dadurch erhält man einen verbesserten Signal-Rausch-Abstand (SNR = signal noise ratio) im Ausgangssignal und eine verbesserte Winkelauflösung.

ZUSAMMENFASSUNG DER ERFINDUNG

Der vorliegenden Erfindung liegt nun die Aufgabe zugrunde, einen schaltungstechnisch vereinfachten Empfänger zum Empfangen von Funksignalen bereitzustellen.

Erfindungsgemäß wird diese Aufgabe durch ein Empfangsgerät mit den Merkmalen des Patentanspruchs 1 gelöst.

Demgemäß ist ein Empfangsgerät zum signalsensitiven Empfangen von Funksignalen vorgesehen, insbesondere für den Einsatz in der Radioastronomie, mit einem Gehäuse, mit zumindest einem am Gehäuse vorgesehenen Eingangsanschluss, der zur Aufnahme von Funksignalen mit einer Empfangsantenne des Empfangsgeräts gekoppelt ist oder mit einer externen Empfangsantenne koppelbar ist, mit einer Vielzahl von gleichartigen Empfängerschaltungen, die innerhalb des Gehäuses derart verschaltet sind, dass sie voneinander unabhängig betreibbare Signalzüge aufweisen, wobei der Signalzug einer jeweiligen Empfängerschaltung jeweils einen Verstärker sowie jeweils eine diesem Verstärker nachgeschaltete Verarbeitungseinrichtung aufweist, mit einer steuerbaren Schaltvorrichtung, die dazu ausgebildet ist, die Vielzahl von Signalzügen der Empfängerschaltungen durch Umschalten nacheinander zyklisch auf den Eingangsanschluss aufzuschalten, mit einer ausgangsseitigen Summationsvorrichtung, die dazu ausgebildet ist, die durch zyklisches Umschalten ausgangsseitig der jeweiligen Empfängerschaltungen anliegenden Ausgangssignale aufzusummieren, und mit einem A/D-Wandler, der über die steuerbare Schaltvorrichtung auf einen jeweiligen Signalzug zwischen dem Verstärker und der Verarbeitungseinrichtung geschaltet werden kann, und der dazu vorgesehen ist, ein von dem jeweiligen Verstärker verstärktes analoges Empfangssignal zu digitalisieren und der jeweiligen nachgeschalteten digitalen Verarbeitungseinrichtung zuzuführen, wobei jeder Signalzug eine dominante Rauschquelle aufweist, welche jeweils durch den eingangsseitig in dem jeweiligen Signalzug vorgesehenen Verstärker bestimmt ist, und wobei die dominanten Rauschquellen in den verschiedenen Signalzügen verschieden und nicht miteinander korreliert sind.

Die der vorliegenden Erfindung zugrunde liegende Idee besteht darin, eine Vielzahl von gleichartig ausgebildeten Empfängerschaltungen innerhalb desselben Empfangsgerätes zu implementieren bzw. zu integrieren. Gleichartig in diesem Zusammenhang bedeutet, dass die jeweiligen Schaltungselemente innerhalb der Signalzüge der jeweiligen Empfängerschaltungen, wie etwa Vorverstärkerstufe, Signalverarbeitung, Filter, etc., jeweils gleich oder sogar identisch aufgebaut sind und deshalb eine identische Empfängercharakteristik und -funktion aufweisen. Wesentlich ist, dass die dominanten Rauschquellen, welche den verschiedenen Signalzügen überlagert sind, verschieden sind, d.h. die verschiedenen Rauschsignale in den verschiedenen Signalzügen sind nicht miteinander korreliert.

Über eine geeignete steuerbare Schaltvorrichtung werden die verschiedenen Signalzüge kontinuierlich nacheinander umgeschaltet, sodass die verschiedenen Signalzüge jeweils abwechselnd die eingangsseitig aufgenommenen Funksignale erhalten.

Nachdem die Signalzüge identisch aufgebaut sind, liefern sie ausgangsseitig gleichartige Ausgangssignale mit Rauschen gleicher Energie, welches aber nicht miteinander korreliert ist. Bei ausreichend hoher Umschaltfrequenz im Verhältnis zur Bandbreite des dem jeweiligen Nutzsignal überlagerten Rauschens, erhält man mit den unterschiedlichen Signalzügen jeweils Ausgangssignale mit derselben Signalcharakteristik und Amplitude. Addiert bzw. überlagert man nun diese Ausgangssignale, ergibt sich eine signifikante SNR Verbesserung und eine Reduktion des Rauschmaßes des Empfangsgeräts. Im Falle einer Anzahl von N Signalzügen und somit N gleichartig ausgebildeten, parallele zueinander angeordneten Empfängerschaltungen innerhalb des Empfangsgeräts ergibt sich durch die Addition eine SNR Verbesserung von 10 * log (N) dB. Ist die Umschaltfrequenz hoch genug im Verhältnis zur Rauschbandbreite des aufgenommenen Nutzsignales, erhält man dasselbe Ergebnis wie mit N völlig getrennten Empfangsgeräten.

Der besondere Vorteil der vorliegenden Erfindung ergibt sich dadurch, dass dieselbe Funktionalität nun in einem einzigen Empfangsgerät implementiert ist, wofür vorher eine Vielzahl von Empfangsgeräten notwendig war. Die Erfindung zeichnet sich also durch eine besonders einfache Empfängeranordnung aus, die kostengünstiger herstellbar ist und vor allem im Betrieb einfacher handhabbar ist.

Für den Fall von zwei Empfängerschaltungen liefern diese ein gleich großes SNR, ein Nutzsignal mit jeweils gleicher Amplitude und ein Rauschsignal jeweils gleicher Amplitude, da die beiden Empfängerschaltungen schaltungstechnisch identisch aufgebaut sind. Jedoch sind die Rauschsignale der beiden Empfängerschaltungen nicht miteinander korreliert, da die dominanten Rauschquellen der beiden Empfängerschaltungen naturgemäß verschieden sind. Überlagert man also die von den beiden Empfängerschaltungen erzeugten Ausgangssignale, dann überlagern sich die Spannungen deren Nutzsignale, d.h. das durch Überlagerung gewonnene Ausgangssignal steigt um 6 dB. Die Überlagerung der beiden nicht miteinander korrelierten Rauschsignale im überlagerten Ausgangssignal führt zu einem Anstieg der Rauschleistung von lediglich 3dB. Dadurch ergibt sich eine signifikante Verbesserung der Empfindlichkeit von Empfängern.

Die Erfindung ist prinzipiell auf Empfangsgeräte für beliebige Anwendungen einsetzbar, ist jedoch besonders vorteilhaft für Empfangsgeräte für den Einsatz in der Radioastronomie.

Vorteilhafte Ausgestaltungen und Weiterbildungen ergeben sich aus den weiteren Unteransprüchen sowie aus der Beschreibung unter Bezugnahme auf die Figuren der Zeichnung.

In einer typischen Ausgestaltung sind die Signalzüge der Empfängerschaltungen zwischen dem Eingangsanschluss und der Summationsvorrichtung parallel zueinander angeordnet. Wobei der Signalzug einer jeweiligen Empfängerschaltung weist jeweils einen Verstärker sowie jeweils eine diesem Verstärker nachgeschaltete Verarbeitungseinrichtung auf. Die Verarbeitungseinrichtung kann zum Beispiel als ASIC ausgebildet sein und beispielsweise Filterelemente, Demodulator, Verstärker und dergleichen aufweisen. Im Betrieb ist die steuerbare Schaltvorrichtung dazu ausgebildet, die Vielzahl von Signalzügen durch Umschalten nacheinander zyklisch mit dem Eingang derart zu verbinden, dass ein über den Eingang aufgenommenes Funksignal in einem jeweiligen Signalzug verstärkt und zu einem Ausgangssignal weiter verarbeitet wird. Diese Ausgangssignale sind dann ausgangsseitig der jeweiligen Empfängerschaltungen abgreifbar.

Gemäß einem Ausführungsbeispiel sind die Signalzüge und insbesondere die dort angeordneten Verstärker und Verarbeitungseinrichtungen derart gleich oder identisch zueinander aufgebaut, dass durch Umschalten der unterschiedlichen Signalzüge erzeugte, unmittelbar aufeinander folgende Ausgangssignale einen gleichen bzw. identischen Signal-Rausch-Abstand (SNR) aufweisen.

Jeder Signalzug innerhalb einer Empfängerschaltung weist eine dominante Rauschquelle auf. Typischerweise wird in einer Empfängerschaltung die dominante Rauschquelle durch den eingangsseitig in dem jeweiligen Signalzug vorgesehenen Verstärker bestimmt. Dabei unterscheiden sich die dominanten Rauschquellen der unterschiedlichen Verstärker, sodass ein jeweiliger Verstärker jeweils ein zu den Verstärkern der übrigen Signalzüge nicht-korreliertes Rauschen gleichen Betrags aufweist. Die dominante Rauschquelle beinhaltet zum Beispiel thermisches Rauschen.

Besonders bevorzugt ist der Verstärker ein LNA-Verstärker (LNA = Low Noise Amplifier). Unter einem rauscharmer Verstärker bzw. LNA-Verstärker ist eine spezielle Art elektronischer Verstärker zu verstehen, die sich schaltungstechnisch durch besondere Rauscharmut auszeichnen, um extrem schwache Signale zu verstärken, ohne dabei gleich das ganze Frequenzband in tiefere Frequenzen umzusetzen. Eine besondere Kenngröße eines LNAs ist die Rauschzahl. Derartige LNAs finden sich insbesondere im Empfangspfad von HF-Empfangsgeräten, wo es meist das erste Schaltungselement der analogen Signalverarbeitung bildet. Insbesondere durch den Einsatz mehrerer geschalteter Frontend-Verstärker (LNAs) erhält man also eine deutliche SNR Verbesserung des Empfangsgeräts.

In einer weiteren Ausgestaltung ist der Eingangsanschluss als HF-Eingangsschnittstelle zum Aufnehmen von über eine HF-Empfangsantenne eingekoppelten HF-Empfangssignalen ausgebildet.

Es ist ein A/D-Wandler, zum Beispiel ein Parallel-A/D-Wandler oder ein Kaskadenwandler vorgesehen. Der A/D-Wandler ist dazu vorgesehen, ein von dem Verstärker verstärktes analoges Empfangssignal zu digitalisieren und der jeweils nachgeschalteten digitalen Verarbeitungseinrichtung zuzuführen.

Auf diese Weise kann die Signalverarbeitung digital durchgeführt werden, was eine höhere Dynamik bietet.

Vorgesehen ist dabei die Verwendung lediglich eines einzigen A/D-Wandlers, der über die steuerbare Schaltvorrichtung auf den jeweiligen Signalzug geschaltet wird, vorzugsweise unter Verwendung desselben Umschaltungssignals.

In einer typischen Ausgestaltung ist eine Steuereinrichtung vorgesehen, welche das zyklische Umschalten der steuerbaren Schaltvorrichtung steuert. Damit steuert die Steuereinrichtung neben der Schaltvorrichtung auch die Funktion des A/D-Wandlers und vorzugsweise auch anderer steuerbaren Komponenten des Empfangsgeräts. Die Steuereinrichtung ist vorzugweise als logische integrierte Schaltung, wie etwa als FPGA, PLD oder dergleichen ausgebildet, könnte jedoch in komplexeren Empfangsgeräten auch als programmgesteuerte Einrichtung, wie etwa als Mikroprozessor, Mikrocomputer oder dergleichen, ausgebildet sein.

Insbesondere für digitale Anwendungen weist die Steuereinrichtung vorzugsweise eine Oszillatorschaltung auf, die dazu ausgebildet ist, ein Abtastsignal zur Abtastung des verstärkten Eingangssignals und für den A/D-Wandler bereitzustellen.

Vorzugsweise weist die Steuereinrichtung eine Teilerschaltung auf, welche dazu ausgebildet ist, ein Steuersignal für das zyklische Umschalten der steuerbaren Schaltvorrichtung durch Herunterteilen aus demselben, von der Oszillatorschaltung erzeugten Abtastsignal zu erzeugen. Damit ist der Betrieb des A/D-Wandler vorzugsweise synchron zur Umschaltung der Schaltvorrichtung.

In einer besonders bevorzugten Ausgestaltung ist die steuerbare Schaltvorrichtung als HF-Schalter ausgebildet. Beispielsweise kann hier ein elektronischer Schalter, wie etwa ein MOS-FET, JFET oder etwa auch ein HF Relais zum Einsatz kommen.

In einer weiteren Ausgestaltung sind die Vielzahl von Signalzügen, insbesondere deren Verstärker und Verarbeitungseinrichtungen, in derselben integrierten Schaltung integriert. Alternativ können sie auch auf derselben Platine angeordnet sein. Besonders bevorzugt lassen sich die Verstärker, wie etwa die verschiedenen umschaltbaren LNAs, samt dem HF- Schalter sehr einfach integrieren.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:

Fig. 1 ein Beispiel einer in der Radioastronomie verwendeten, allgemein bekannten Empfängeranordnung mit zwei parallelen Empfangsgeräten;

Fig. 2 ein Blockschaltbild zur Erläuterung eines ersten, allgemeinen Ausführungsbeispiels eines erfindungsgemäßen Empfangsgeräts;

Fig. 3 ein Blockschaltbild zur Erläuterung eines zweiten Ausführungsbeispiels eines nicht beanspruchten Empfangsgeräts;

Fig. 4 ein Blockschaltbild zur Erläuterung eines dritten Ausführungsbeispiels eines erfindungsgemäßen Empfangsgeräts.

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausführt ist - jeweils mit denselben Bezugszeichen versehen.

BESCHREIBUNG VON AUSFÜHRUNGSBEISPIELEN

Fig. 1 zeigt ein Blockschaltbild zur Erläuterung eines ersten, allgemeinen Ausführungsbeispiels eines erfindungsgemäßen Empfangsgeräts.

In Fig. 2 ist das Empfangsgerät mit Bezugszeichen 10 bezeichnet. Das Empfangsgerät 10 ist hier für den Einsatz in der Radioastronomie vorgesehen.

Das Empfangsgerät 10 weist ein vorwiegend geschlossenes Gehäuse 11 auf. An dem Gehäuse 11 ist ein HF-Eingangsanschluss 12 vorgesehen, der mit einer (in Fig. 2 nicht gezeigten) HF-Empfangsantenne zum Empfangen von HF-Funksignalen koppelbar ist.

Innerhalb des Gehäuses 11 des Empfangsgeräts 10 sind im gezeigten Beispiel zwei Empfängerschaltungen 13, 14, eine steuerbare Schaltvorrichtung 15 und eine Summationsvorrichtung 16 vorgesehen. Die beiden Empfängerschaltungen 13, 14 sind parallel zueinander zwischen der Schaltvorrichtung 15 und der Summationsvorrichtung 16 angeordnet. Die somit voneinander unabhängig betreibbaren Empfängerschaltungen 13, 14 sind gleichartig ausgebildet, das heißt deren (in Fig. 2 nicht gezeigten) Signalzüge weisen eine gleiche oder identische Schaltungscharakteristik und somit Signalcharakteristik auf.

Mittels der steuerbaren Schaltvorrichtung 15 werden die beiden Empfängerschaltungen 13, 14 durch Umschalten nacheinander zyklisch mit dem Eingangsanschluss 12 verbunden. Die dann ausgangsseitig der jeweiligen Empfängerschaltungen 13, 14 durch zyklisches Umschalten anliegenden Ausgangssignale S2, S3 werden in der Summationsvorrichtung 16 aufzusummieren.

Das erfindungsgemäße Empfangsgerät 10 verwendet also nur die relevanten Komponenten von verschiedenen Empfängern, wie z.B. den Frontend-Verstärker, und integriert diese in einem einzigen Empfangsgerät 10. Dies führt zu einer deutlichen Reduzierung des schaltungstechnischen Aufwands, um den Vorteil separater korrelierter Empfänger zu erreichen.

Fig. 3 zeigt ein Blockschaltbild zur Erläuterung eines zweiten Ausführungsbeispiels eines nicht beanspruchten Empfangsgeräts.

Das Empfangsgerät 10 weist neben dem HF-Eingangsanschluss 12 und einen Ausgangsanschluss 20 auf. An dem HF-Eingangsanschluss 12 ist eine HF-Empfangsantenne 21 zum Empfangen von HF-Funksignalen S1 angeschlossen.

Das Empfangsgerät 10 weist intern zwei Empfängerschaltungen 13, 14 mit jeweils einem Signalzug auf. Dabei umfasst jede Empfängerschaltung 13, 14 eingangsseitig einen LNA-Verstärker 22, 23, die die Vorverstärkerstufe bildet, sowie eine nachgeschaltete Verarbeitungseinrichtung 24, 25. Im gezeigten Beispiel umfasst eine jeweilige Verarbeitungseinrichtung 24, 25 jeweils einen Bandpassfilter 26, 27 und einen nachgeschalteten Demodulator 28, 29. Das Beispiel in Fig. 3 zeigt jedoch lediglich ein Prinzipschaltbild. So kann zum Beispiel die Verarbeitungseinrichtung 24, 25 weitere Schaltungselemente beinhalten, wie etwa weitere Filter, Nachverstärker, etc.

Jeder Signalzug beinhaltet ein unterschiedliches Rauschsignal, wobei die dominante Rauschquelle typischerweise jeweils der Vorverstärkerstufe 22, 23 zugeordnet ist. Im gezeigten Beispiel ist dem LNA-Verstärker 22 eine erste dominante Rauschquelle 34 mit einem Rauschsignal N1 zugeordnet, während eine zweite dominante Rauschquelle 35 mit einem Rauschsignal N2 dem anderen LNA-Verstärker 23 zugeordnet ist.

Das Empfangsgerät 10 weist ferner eine Schalteinrichtung 15 auf. Im gezeigten Beispiel umfasst die Schalteinrichtung 15 einen HF-Schalter 30, der zwischen dem Eingangsanschluss und der jeweiligen Vorverstärkerstufe 22, 23 eines Signalzugs angeordnet ist. Über ein Umschaltsignal X wird der HF-Schalter 30 zyklisch umgeschaltet, sodass abwechseln der LNA-Verstärker 22 und anschließend der LNA-Verstärker 23 auf die Empfangsantenne 21 aufgeschaltet wird. Das aufgenommene HF-Signal S1 wird also zunächst über die Empfängerschaltung 13 aufgenommen, also im LNA-Verstärker 22 vorverstärkt und anschließend in der nachgeschalteten Verarbeitungseinrichtung 24 geeignet weiterverarbeitet. An einem Ausgang 36 der Empfängerschaltung 13 ist somit ein analoges, verstärktes und weiterverarbeitetes HF-Empfangssignal S2 abgreifbar. Das Signal-Rausch-Verhältnis SNR1 am Ausgang 36 dieses ersten Signalzugs beträgt dann SNR1 = S1/N1, wobei mit S1 die Amplitude des aufgenommenen HF-Empfangssignals X bezeichnet ist.

In gleicher Weise wird nach einem Umschalten durch den HF-Schalter 30 das HF-Signal S1 auf die andere Empfängerschaltung 14 aufgeschaltet und dort verstärkt und zu einem HF-Empfangssignal S3 weiterverarbeitet. Das Signal-Rausch-Verhältnis SNR2 am Ausgang 37 dieses zweiten Signalzugs beträgt dann SNR2 = S1/N2.

Das Empfangsgerät 10 weist ferner eine Summationseinrichtung 16 auf, die den Empfängerschaltungen 13, 14 nachgeschaltet ist. Die Summationseinrichtung 16 summiert die beiden von den Empfängerschaltungen 13, 14 erzeugten Signale S2, S3 miteinander, beispielsweise durch Überlagerung, und erzeugt damit ein Ausgangssignal S4, welches an einem Ausgangsanschluss 20 des Empfangsgeräts 10 anliegt.

Damit ergibt sich für die Signalamplitude und Rauschamplitude im Ausgangssignals S4 folgender Zusammenhang:

$$\text{Signalamplitude} = 2*S1$$

$$\text{Rauschamplitude} = \sqrt{N1}+\sqrt{N2}$$

Das Signal-Rausch-Verhältnis $SNR_{OUT}$ am Ausgang des Empfangsgeräts beträgt somit:

$$SNR_{OUT} = (SNR1)/2 + 3dB.$$

Somit ergibt sich eine signifikante Verbessrung des Signal-Rausch-Verhältnisses im Ausgangssignal S4, da die Rauschsignale N1, N2 aufgrund der unterschiedlichen dominanten Rauschquellen in den beiden Vorverstärkerstufen 22, 23 und damit einhergehend aufgrund des somit nicht korrelierten Rauschens im Ausgangssignals herausgemittelt wird.

Fig. 4 zeigt ein Blockschaltbild zur Erläuterung eines dritten Ausführungsbeispiels eines erfindungsgemäßen Empfangsgeräts.

Im Beispiel in Fig. 4 umfasst eine Empfängerschaltung 13, 14 jeweils einen eingangsseitigen analogen Signalzug und einen nachgeschalteten digitalen Signalzug. Zwischen den analogen und den digitalen Signalzügen ist ein A/D-Wandler 40 angeordnet. Der A/D-Wandler 40 digitalisiert die von den LNA-Verstärkern 22, 23 vorverstärkten analogen Empfangssignale, welche dann in den digital arbeitenden Verarbeitungseinrichtungen 24, 25 weiter verarbeitet werden. Diese digitalen Verarbeitungseinrichtungen 24, 25 können zusammen mit der Summationseinrichtung 16 in einer anwendungsspezifischen integrierten Schaltung (ASIC), wie etwa FPGA, FPGL, PLD oder dergleichen, angeordnet sein.

Im vorliegenden Ausführungsbeispiel ist lediglich ein einziger A/D-Wandler 40 für beide Signalzüge vorgesehen. Aus diesem Grunde umfasst die steuerbare Schalteinrichtung 15 zusätzlich jeweils zwei weitere Schalter 41, 42, die eingangsseitig bzw. ausgangsseitig des A/D-Wandler 40 angeordnet sind und die dazu ausgebildet sind, den A/D-Wandler 40 abwechselnd auf den ersten Signalzug und den zweiten Signalzug aufzuschalten. Dieses Umschalten erfolgt typischerweise und vorzugsweise mittels desselben Umschaltsignals X für den eingangsseitigen Schalter, sodass das das Umschalten jeweils synchronisiert ist.

Zusätzlich ist eine Oszillatorschaltung 43 vorgesehen, welche ein Abtastsignal Y generiert. Das Abtastsignal Y wird für den A/D-Wandler 40 verwendet. Zusätzlich wird über eine Teilerschaltung 44 durch Herunterteilen aus dem Abtastsignal Y das Umschaltsignal X für die steuerbare Schaltvorrichtung 15 generiert.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

Bezugszeichenliste

| | |
|---|---|
| 10 | Empfangsgerät |
| 11 | Gehäuse |
| 12 | (HF-)Eingangsanschluss, HF-Eingangsschnittstelle |
| 13, 14 | Empfängerschaltungen |
| 15 | (steuerbare) Schaltvorrichtung |
| 16 | Summationsvorrichtung |
| 20 | Ausgangsanschluss |
| 21 | (HF)-Empfangsantenne |
| 22, 23 | LNA-Verstärker, Vorverstärker |
| 24, 25 | Verarbeitungseinrichtungen |
| 26, 27 | Bandpassfilter |
| 28, 29 | Demodulatoren |
| 30 | HF-Schalter |
| 34, 35 | (dominante) Rauschquelle |
| 36, 37 | Ausgang der Empfängerschaltung |
| 40 | A/D-Wandler |
| 41, 42 | weitere Schalter (der steuerbaren Schaltvorrichtung) |
| 43 | Oszillatorschaltung |
| 44 | Teilerschaltung |
| N1, N2 | Rauschsignale |
| S1 | (HF-)Funksignal, Empfangssignal |
| S2, S3 | HF-Empfangssignale |
| S4 | Ausgangssignal |
| X | Umschaltsignal |
| Y | Abtastsignal |

**Patentansprüche**

1. Empfangsgerät (10) zum signalsensitiven Empfangen von Funksignalen (S1), insbesondere für den Einsatz in der Radioastronomie,

 mit einem Gehäuse (11),
 mit zumindest einem am Gehäuse (11) vorgesehenen Eingangsanschluss (12), der zur Aufnahme von Funksignalen (S1) mit einer Empfangsantenne (21) des Empfangsgeräts (10) gekoppelt ist oder mit einer externen Empfangsantenne koppelbar ist, mit einer Vielzahl von gleichartigen Empfängerschaltungen (13, 14), die innerhalb des Gehäuses (11) derart verschaltet sind, dass sie voneinander unabhängig betreibbare Signalzüge aufweisen, wobei der Signalzug einer jeweiligen Empfängerschaltung (13, 14) jeweils einen Verstärker (22, 23) sowie jeweils eine diesem Verstärker (22, 23) nachgeschaltete Verarbeitungseinrichtung (24, 25) inklusive einer digitalen Verarbeitungseinrichtung aufweist,
 mit einer steuerbaren Schaltvorrichtung (15), die dazu ausgebildet ist, die Vielzahl von Signalzügen der Empfängerschaltungen (13, 14) durch Umschalten nacheinander zyklisch auf den Eingangsanschluss (12) aufzuschalten,
 mit einer ausgangsseitigen Summationsvorrichtung (16), die dazu ausgebildet ist, die durch zyklisches Umschalten ausgangsseitig der jeweiligen Empfängerschaltungen anliegenden Ausgangssignale (S2, S3) aufzusummieren, und
 mit einem einzigen A/D-Wandler (40), der über die steuerbare Schaltvorrichtung (15) auf einen jeweiligen Signalzug zwischen dem Verstärker (22, 23) und der Verarbeitungseinrichtung (24, 25) geschaltet werden kann, und der dazu vorgesehen ist, ein von dem jeweiligen Verstärker (22, 23) verstärktes analoges Empfangssignal zu digitalisieren und der jeweiligen nachgeschalteten digitalen Verarbeitungseinrichtung (24, 25) zuzuführen,
 wobei jeder Signalzug eine dominante Rauschquelle (34, 35) aufweist, welche jeweils durch den eingangsseitig in dem jeweiligen Signalzug vorgesehenen Verstärker (22, 23) bestimmt ist, und
 wobei die dominanten Rauschquellen (34, 35) in den verschiedenen Signalzügen verschieden und nicht miteinander korreliert sind.

2. Empfangsgerät nach Anspruch 1,
**dadurch gekennzeichnet,**
**dass** die Signalzüge der Empfängerschaltungen (13, 14) zwischen dem Eingangsanschluss (12) und der Summationsvorrichtung (16) parallel zueinander angeordnet sind.

3. Empfangsgerät nach einem der vorstehenden Ansprüche,
**dadurch gekennzeichnet,**
**dass** die Signalzüge und insbesondere die dort angeordneten Verstärker (22, 23) und Verarbeitungseinrichtungen (24, 25) derart gleich oder identisch aufgebaut sind, dass durch Umschalten der unterschiedlichen Signalzüge erzeugte, unmittelbar aufeinander folgende Ausgangssignale (S2, S3) einen gleichen bzw. identischen Signal-Rausch-Abstand (SNR) aufweisen.

4. Empfangsgerät nach einem der vorstehenden Ansprüche, **dadurch gekennzeichnet,**
**dass** der Verstärker (22, 23) ein LNA-Verstärker (22, 23) ist.

5. Empfangsgerät nach einem der vorstehenden Ansprüche, **dadurch gekennzeichnet,**
**dass** der Eingangsanschluss (12) als HF-Eingangsschnittstelle (12) zum Aufnehmen von über eine HF-Empfangsantenne (21) eingekoppelten HF-Empfangssignalen (S1) ausgebildet ist.

6. Empfangsgerät nach einem der vorstehenden Ansprüche, **dadurch gekennzeichnet,**
**dass** eine Steuereinrichtung vorgesehen ist, welche das zyklische Umschalten der steuerbaren Schaltvorrichtung (15) steuert.

7. Empfangsgerät nach Anspruch 6,
**dadurch gekennzeichnet,**
**dass** die Steuereinrichtung einen Oszillator (43) aufweist, der dazu ausgebildet ist, ein Abtastsignal (y) für den A/D-Wandler (40) bereitzustellen.

8. Empfangsgerät nach Anspruch 6 oder 7,
**dadurch gekennzeichnet,**
**dass** die Steuereinrichtung eine Teilerschaltung (44) aufweist, welche dazu ausgebildet ist, aus dem Abtastsignal (y) ein Steuersignal (x) für das zyklische Umschalten der steuerbaren Schaltvorrichtung zu erzeugen.

9. Empfangsgerät nach einem der vorstehenden Ansprüche, **dadurch gekennzeichnet,**
**dass** die steuerbare Schaltvorrichtung (15) als HF-Schalter ausgebildet ist.

10. Empfangsgerät nach einem der vorstehenden Ansprüche, **dadurch gekennzeichnet,**
**dass** die Vielzahl von Signalzügen, insbesondere deren Verstärker (22, 23) und Verarbeitungseinrichtungen (24, 25), in derselben integrierten Schaltung integriert sind und/oder auf derselben Platine angeordnet sind.

## Claims

1. Receiving device (10) for signal-sensitive reception of radio signals (S1), in particular for use in radio astronomy,

having a housing (11),
having at least one input terminal (12) which is provided on the housing (11) and is coupled to a receiving antenna (21) of the receiving device (10) to receive radio signals (S1) or can be coupled to an external receiving antenna,
having a plurality of similar receiver circuits (13, 14) which are connected within the housing (11) such that they have signal trains which can be operated independently of one another, wherein the signal train of each receiver circuit (13, 14) each has an amplifier (22, 23) and a processing means (24, 25), including a digital processing means, which is connected downstream of this amplifier (22, 23), having a controllable switching apparatus (15) which is designed to cyclically connect the plurality of signal trains of the receiver circuits (13, 14) to the input terminal (12) by switching one after the other,
having an output-side summation apparatus (16) which is designed to sum the output signals (S2, S3) which are present on the output side of each of the receiver circuits due to cyclic switching, and
having a single A/D converter (40) which can be switched to each signal train between the amplifier (22, 23) and the processing means (24, 25) via the controllable switching apparatus (15) and is intended to digitize an analog received signal which is amplified by each amplifier (22, 23) and to supply it to each downstream digital processing means (24, 25),
wherein each signal train has a dominant noise source (34, 35) which is determined by the amplifier (22, 23) which is provided on the input side in each signal train, and
wherein the dominant noise sources (34, 35) in the different signal trains are different and not correlated with one another.

2. Receiving device according to claim 1,
**characterized in that**
the signal trains of the receiver circuits (13, 14) are arranged in parallel with one another between the input terminal (12) and the summation apparatus (16).

3. Receiving device according to either of the preceding claims,
**characterized in that**
the signal trains, and in particular the amplifiers (22, 23) and processing means (24, 25) arranged there, are constructed in the same or identical manner such that output signals (S2, S3) which are generated by switching the different signal trains and directly follow one another have the same or identical signal-to-noise ratio (SNR).

4. Receiving device according to any of the preceding claims,
**characterized in that**
the amplifier (22, 23) is an LNA amplifier (22, 23).

5. Receiving device according to any of the preceding claims,
**characterized in that**
the input terminal (12) is designed as an RF input interface (12) for receiving RF received signals (S1) which are coupled in via an RF receiving antenna (21).

6. Receiving device according to any of the preceding claims,
**characterized in that**
a control means is provided, which controls the cyclic switching of the controllable switching apparatus (15).

7. Receiving device according to claim 6,
**characterized in that**
the control means has an oscillator (43) which is designed to provide a sampling signal (y) for the A/D converter (40).

8. Receiving device according to either claim 6 or claim 7,
**characterized in that**
the control means has a divider circuit (44) which is designed to generate a control signal (x) from the sampling signal (y) for cyclically switching the controllable switching apparatus.

9. Receiving device according to any of the preceding claims,
**characterized in that**
the controllable switching apparatus (15) is designed as an RF switch.

10. Receiving device according to any of the preceding claims,
**characterized in that**
the plurality of signal trains, in particular their amplifiers (22, 23) and processing means (24, 25), are integrated in the same integrated circuit and/or arranged on the same circuit board.

**Revendications**

1. Appareil de réception (10) pour la réception sensible aux signaux de signaux radio (S1), en particulier pour l'utilisation en radioastronomie,

comportant un boîtier (11),
comportant au moins un raccord d'entrée (12) prévu sur le boîtier (11), lequel raccord d'entrée est couplé à une antenne de réception (21) de l'appareil de réception (10) pour l'enregistrement des signaux radio (S1) ou peut être couplé à une antenne de réception externe,
comportant une pluralité de circuits récepteurs (13, 14) de même type, lesquels sont mis en circuit à l'intérieur du boîtier (11) de telle sorte qu'ils présentent des trains de signaux pouvant être exploités indépendamment les uns des autres, dans lequel le train de signaux d'un circuit récepteur (13, 14) respectif présente respectivement un amplificateur (22, 23) ainsi que respectivement un équipement de traitement (24, 25), y compris un équipement de traitement numérique, qui est monté en aval dudit amplificateur (22, 23), comportant un dispositif de commutation (15) pouvant être commandé, lequel est configuré pour activer de manière cyclique la pluralité de trains de signaux des circuits récepteurs (13, 14) les uns après les autres par commutation au niveau du raccord d'entrée (12),
comportant un dispositif d'addition (16) côté sortie, lequel est configuré pour additionner les signaux de sortie (S2, S3) appliqués côté sortie des circuits récepteurs respectifs par la commutation cyclique, et
comportant un seul convertisseur A/N (40) qui peut être commuté sur un train de signaux respectif entre l'amplificateur (22, 23) et l'équipement de traitement (24, 25) par l'intermédiaire du dispositif de commutation (15) pouvant être commandé, et qui est prévu pour numériser un signal de réception analogique amplifié par l'amplificateur (22, 23) respectif et pour l'amener à l'équipement de traitement (24, 25) numérique respectif monté en aval,
dans lequel chaque train de signaux présente une source de bruit dominante (34, 35), laquelle est déterminée respectivement par l'amplificateur (22, 23) prévu côté entrée dans le train de signaux respectif, et
dans lequel les sources de bruit dominantes (34, 35) sont différentes et non corrélées entre elles dans les différents trains de signaux.

**2.** Appareil de réception selon la revendication 1, **caractérisé en ce** **que** les trains de signaux des circuits récepteurs (13, 14) sont disposés parallèlement les uns aux autres entre le raccord d'entrée (12) et le dispositif d'addition (16).

**3.** Appareil de réception selon l'une des revendications précédentes, **caractérisé en ce** **que** les trains de signaux et en particulier les amplificateurs (22, 23) et les équipements de traitement (24, 25) qui y sont disposés ont une structure semblable ou identique de telle sorte que des signaux de sortie (S2, S3) se succédant immédiatement les uns aux autres et produits par la commutation des différents trains de signaux présentent un rapport signal/bruit (SNR) semblable ou identique.

**4.** Appareil de réception selon l'une des revendications précédentes, **caractérisé en ce** **que** l'amplificateur (22, 23) est un amplificateur LNA (22, 23).

**5.** Appareil de réception selon l'une des revendications précédentes, **caractérisé en ce** **que** le raccord d'entrée (12) est conçu comme une interface d'entrée HF (12) pour l'enregistrement de signaux de réception HF (S1) couplés par l'intermédiaire d'une antenne de réception HF (21).

**6.** Appareil de réception selon l'une des revendications précédentes, **caractérisé en ce** **qu'**un équipement de commande est prévu, lequel commande la commutation cyclique du dispositif de commutation (15) pouvant être commandé.

**7.** Appareil de réception selon la revendication 6, **caractérisé en ce** **que** l'équipement de commande présente un oscillateur (43) qui est configuré pour fournir un signal d'échantillonnage (y) pour le convertisseur A/N (40).

**8.** Appareil de réception selon la revendication 6 ou 7, **caractérisé en ce** **que** l'équipement de commande présente un circuit diviseur (44) qui est configuré pour générer, à partir du signal d'échantillonnage (y), un signal de commande (x) pour la commutation cyclique du dispositif de commutation pouvant être commandé.

**9.** Appareil de réception selon l'une des revendications précédentes, **caractérisé en ce** **que** le dispositif de commutation (15) pouvant être commandé est conçu comme un commutateur HF.

**10.** Appareil de réception selon l'une des revendications précédentes, **caractérisé en ce** **que** la pluralité de trains de signaux, en particulier leurs amplificateurs (22, 23) et équipements de traitement (24, 25), sont intégrés dans le même circuit intégré et/ou sont disposés sur la même carte de circuit imprimé.

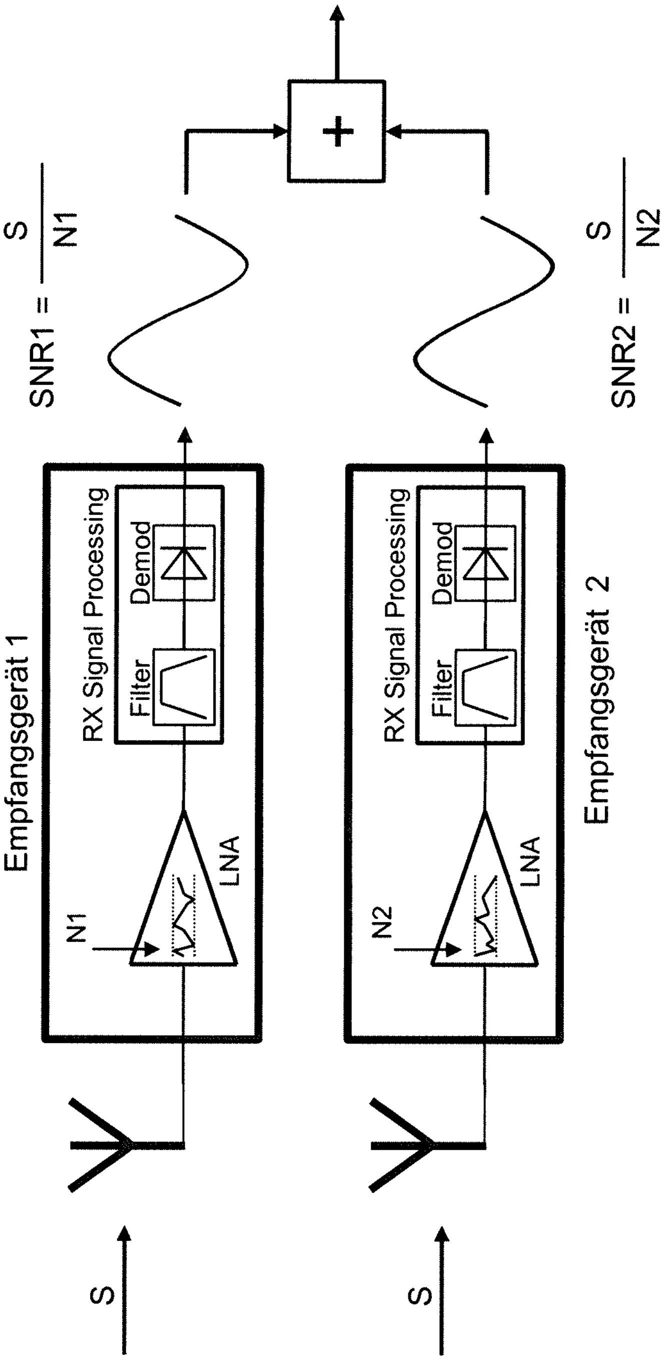
S
S
Empfangsgerät 1
N1
LNA
RX Signal Processing
Filter
Demod
Empfangsgerät 2
N2
LNA
RX Signal Processing
Filter
Demod
SNR1 = S / N1
SNR2 = S / N2
+

Fig. 1

Fig. 2

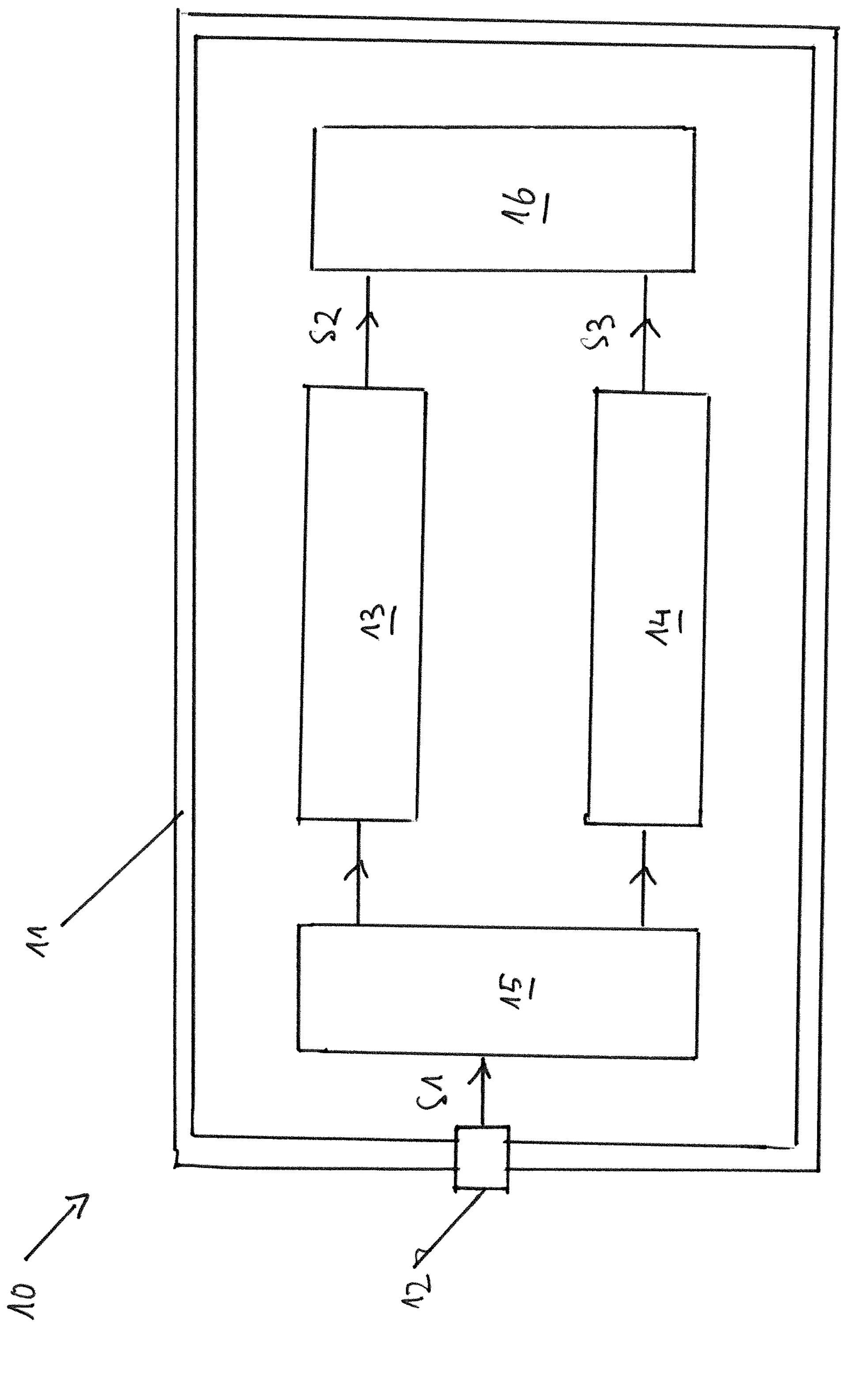

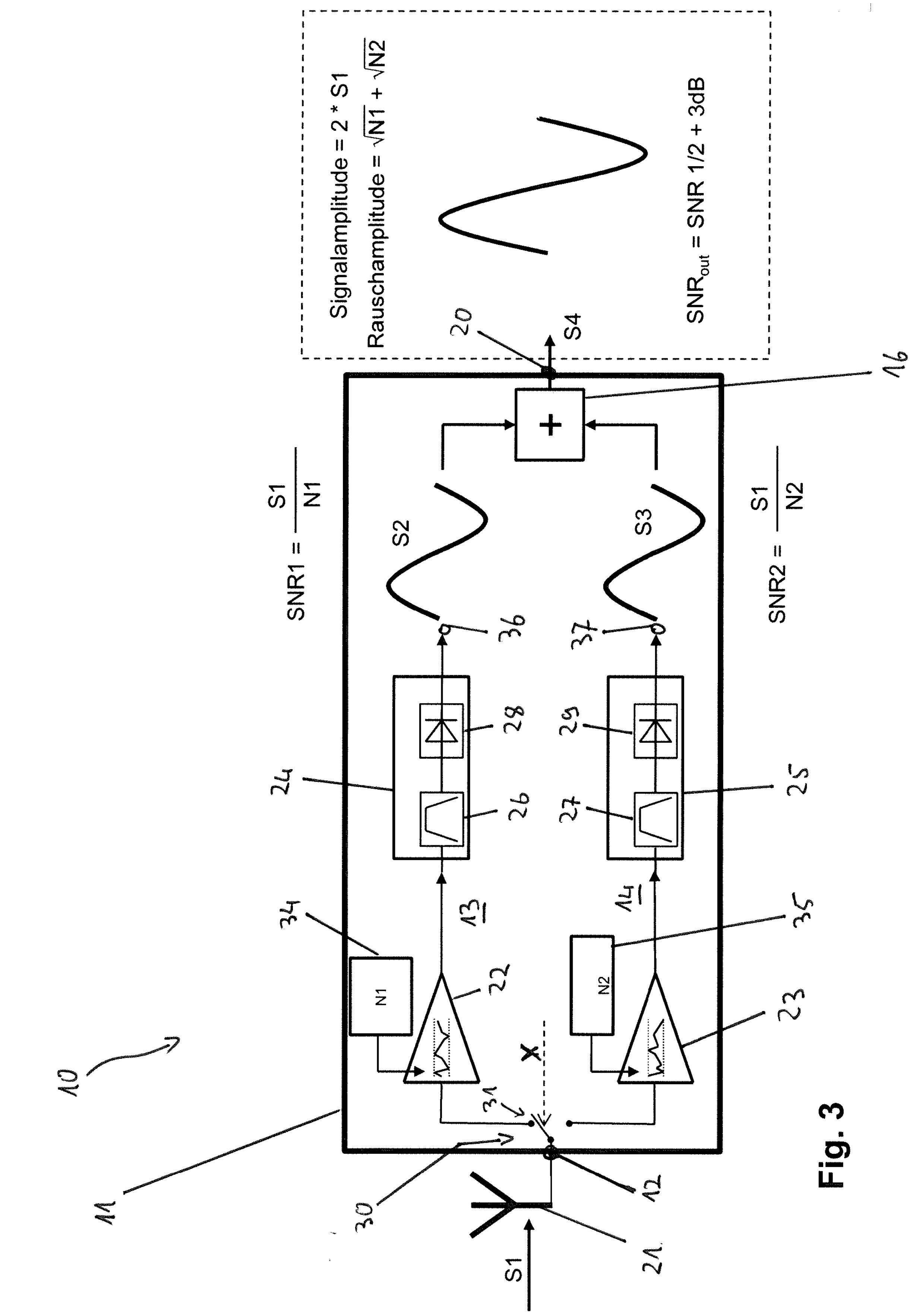
Signalamplitude = 2 * S1
Rauschamplitude = √N1 + √N2
SNR_out = SNR 1/2 + 3dB
S4
SNR1 = S1/N1
SNR2 = S1/N2
S1
S2
S3
N1
N2
X
10
11
12
13
14
16
20
21
22
23
24
25
26
27
28
29
30
31
34
35
36
37

Fig. 3

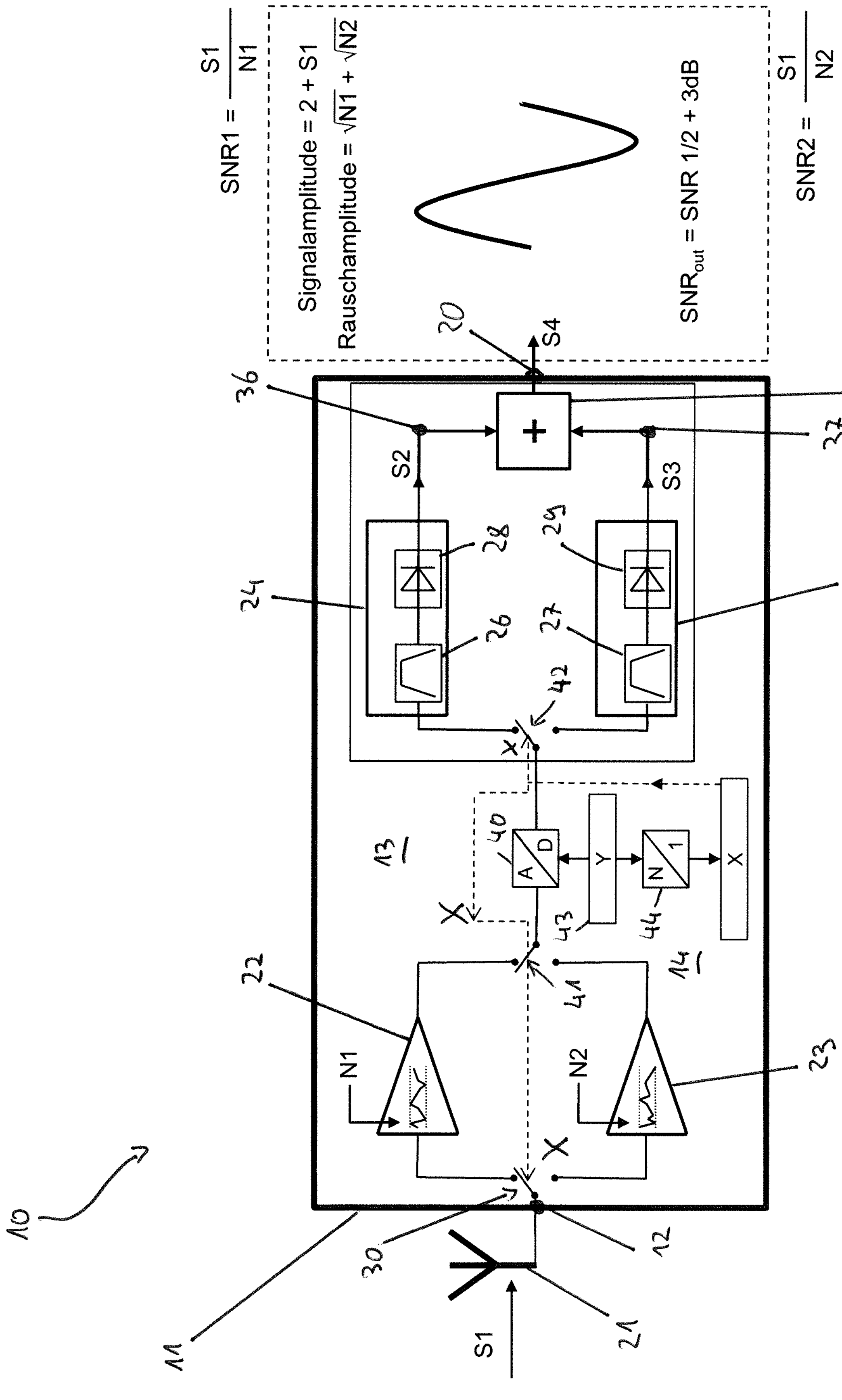
SNR1 = S1 / N1
Signalamplitude = 2 + S1
Rauschamplitude = √N1 + √N2
SNR_out = SNR 1/2 + 3dB
SNR2 = S1 / N2
S1
S2
S3
S4
N1
N2
A
D
Y
N
1
X
+
10
11
12
13
14
16
20
21
22
23
24
25
26
27
28
29
30
36
37
40
41
42
43
44

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **DRUCKSCHRIFT TIURI, M. E.** Radio Astronomy Receivers. *IEEE Transactions on Military Electronics,* 1964, vol. 1 (01), 264-272